# EUROPEAN PATENT SPECIFICATION

(11) **EP 0 857 703 B1**
(45) Date of publication and mention of the grant of the patent: **11.06.2008**
(21) Application number: 98300472.2
(22) Date of filing: 23.01.1998
(51) Int. Cl.: C04B 35/622, C04B 35/66, C04B 35/043

(54) **Recycling of refractory material**
Recycling von Feuerfestmaterial
Récyclage d'un matériau réfractaire

(30) Priority: 05.02.1997 GB 9702284
(43) Date of publication of application: 12.08.1998
(73) Proprietor: VESUVIUS CRUCIBLE COMPANY, Wilmington, Delaware 19803 (US)
(72) Inventor: Strawbridge, Ian, Gleadless, Sheffield, S12 3JE (GB)
(74) Representative: Debled, Thierry

(56) References cited:
- DD-A- 100 445
- US-A- 4 140 745

## Description

This invention relates to refractory materials and is particularly concerned with refractory materials that are recycled from otherwise waste materials.

With increasing environmental awareness, there is a move towards increased recycling of otherwise waste materials. This is a view which is beginning to find favour among the users of refractory products and attempts are being made to find recycling routes for the residual refractory materials removed from furnace linings at the end of the normal life of the lining.

By way of example, reference is made to US Patent 4,140,745 where there is described a process for leaching magnesium from used refractory articles containing magnesia. It attempts to separate magnesium from insoluble contaminants such as iron oxide and silica. The process involves at least two steps, including hydration of magnesia to magnesium hydroxide and carbonation of the hydroxide to magnesium carbonate. Hydration occurs in the presence of water and is accelerated by using steam and small particle sizes. Carbonisation increases the solubility of the magnesium salt in water, and is accomplished by providing an excess of carbon dioxide. The process chemically changes magnesium oxide to the hydroxide and then to the carbonate.

In the steel industry a significant quantity of material finds use in down cycling operations as was the case for magnesia-carbon products up to about 5 years ago. Previously, reclaimed magnesia-graphite bricks, after minimal treatment to remove front face contamination picked up in service, were crushed to suitable particle sizes and used as a component in current production. More recently when this practice has been followed, problems have occurred occasionally, due to cracking of the products primarily during the curing process of organic binder systems such as phenol-formaldehyde resins and pitches. It has been now confirmed that these problems are coincident with the increased use of metallic additions, notably aluminium powder, to act as an antioxidant to protect the readily oxidisable components such as graphite, carbon black and the binder system. In service these antioxidants react to form carbides and to some extent nitrides, which particularly in the case of aluminium are sensitive to moisture. Such carbides and nitrides are hydratable compounds that can react with the water content or condensation products of the usual binder systems, leading to an expansile hydration and possible cracking of bricks during processing.

In the light of the probability that the incorporation of aluminium powder as an antioxidant addition to magnesia-graphite bricks is likely to continue because of the performance benefits it offers, then a treatment process is required to stabilise the problem contaminants in the scrap material before it can be re-used. The reactions required are hydration reactions which appear to be accelerated by increasing the temperature. There are limits however to the temperature which can be employed, since at higher temperatures, oxidation of the carbonaceous components will reduce the overall yield of the process. Furthermore, there will be competing hydration reactions possible, since not only are the problem materials hydratable, for example aluminium carbide and aluminium nitride, but also some of the desired oxide phases can be subject to hydration, most notably magnesium oxide.

The objective of the present invention is to provide a process for the treatment of otherwise waste refractory materials to enable their recycling and consequent use in the production of fresh batches of material.

According to the present invention a process for the treatment of magnesia-graphite material containing aluminium carbide and aluminium nitride reclaimed from a refractory lining after the end of its useful life is as defined in Claim 1. Superheated steam means steam above the boiling point of water, for example, 100°C at atmospheric pressure.

This treatment prehydrates contaminants such as for example aluminium carbide and aluminium nitride, to stabilise the contaminants prior to reuse and hence provide a stabilised refractory aggregate capable of employment as a component in a fresh batch of material from which a new lining can be produced. Exposing scrap material reclaimed from a magnesia-graphite scrap containing contaminants such as aluminium carbide, aluminium nitride to steam at an elevated temperature, converts the contaminants to a form that is substantially stable to reactions with water/steam occurring during the re-use of the magnesia-graphite material and which is most desirable when the magnesia-graphite scrap is a component in the production of resin bonded pressed shapes, but which is equally of value when the scrap material is a component in the production of such as monolithics.

The time during which the particulate feedstock material should remain within the vessel is largely determined by the level of contaminants it contains, but is additionally influenced by its mean particle size and by furnace temperature. In the manufacture of magnesia-graphite pressed shapes using virgin raw materials, a common maximum particle size is 5mm and this makes a sensible limit to the size of particle to be treated. On the other hand, crushing the feedstock into the process to finer sizes would have the advantage of reducing the diffusion path for the steam to the contaminants; this advantage is outweighed by the observation that the contaminants to be treated are to be found in what was the matrix of fine components of the original brick and as such are likely to be located relatively close to the surface of particles in the crushed and used aggregate. Excessive size reduction would only serve to crush magnesia aggregate to dust - a compound which was not in need of stabilisation and might in any case be prone to hydration itself to an unusable material. The subsequent use of over crushed material would also reduce its usefulness as a feedstock into a typical magnesia-graphite brickmaking composition, since proportionally the overall brick batch composition would have a higher magnesia to graphite ratio than that of the fine matrix component. Insofar as treatment time is concerned, it is preferred that the material remains within the furnace for not less than 10 minutes but not greater than 90 minutes, and more preferably for between 15 minutes and 45 minutes. As to temperature it is preferred to maintain the particulate material at a temperature in the range 100-600°C. Experimental results suggest that with a particle size predominantly less than 4mm exceedingly good results are achieved with a reaction temperature of 400°C for 40 minutes.

Preferably, during the application of superheated steam, the particulate feedstock material is vibrated or otherwise agitated to enable superheated steam to be applied around substantially the full periphery of a substantial number of the particles of the feedstock material. Vibrating or agitating the feedstock material not only provides fresh surfaces for reaction within the particulate material, but also minimises the required duration of the treatment process.

Examples of suitable vessels are an inclined rotating reactor or a rotary swept multiple level vessel.

The process detailed above is particularly suited to magnesia-graphite refractories containing aluminium as an anti-oxidant, but could equally be applied to other systems containing aluminium along with carbonaceous materials.

The invention will now be described by way of example only in relation to the accompanying drawings in which:-
Figure 1 is a schematic side elevation of an experimental tube furnace to confirm the principals of the process of the invention; and
Figure 2 is schematic side elevation of a tube furnace capable of effecting the process of the invention on recovered furnace lining material.

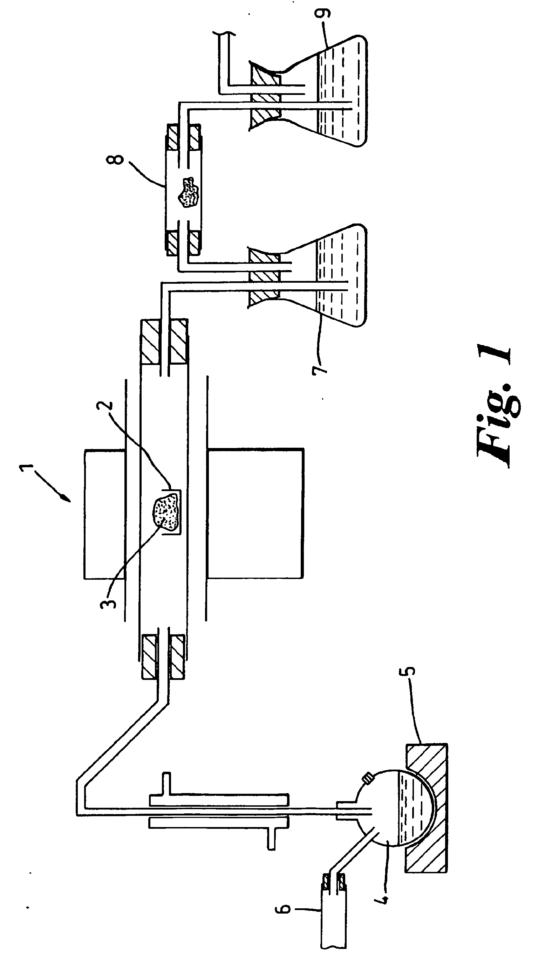

In Figure 1 a tube furnace 1 has loaded in it a boat 2 of particulate material 3 formed from recovered furnace lining material, predominantly magnesia-graphite specially prepared to contain a known quantity of aluminium carbide and nitride. Steam is generated in a vessel 4 by a heater 5, and the steam passed through the tube furnace, whilst the furnace is held at a predetermined temperature. The system is swept with argon gas introduced through a heated feed pipe 6 and through the vessel 4 to the tube furnace. The resultant reaction gases, ammonia and carbon monoxide emitted from the particulate material 3 are collected first in an ammonia trap 7 containing deionised water, the treatment gases then passing through a heated tube 8 at 300°C containing Fe₂O₃ to convert the carbon monoxide to carbon dioxide, and on to a carbon dioxide trap 9 also containing deionised water. The concentrations of these gases are monitored in their respective traps by means of ion specific electrodes (not shown). This experimental treatment method was used to identify the effect of temperature, particle size and steam partial pressure on the time required to complete the treatment of the magnesia-graphite material, to eliminate its contaminants or to reduce them to a level that would not affect the subsequent use of the material in the production of a new furnace lining. The results of the test effected are summarised in Table 1 below:

**Table 1**

| | | Time to Stability | |
|---|---|---|---|
| | | (Minutes) | |
| | Feedstock | | |
| Temperature °C | Particle Size | Carbonate | Ammonia |
| 250 | -250µm | 28.3 | 18.3 |
| 300 | -250µm | 19.2 | 25.0 |
| 350 | -250µm | 17.5 | |
| 400 | -250µm | 12.5 | 18.3 |
| 450 | -250µm | 10.0 | 13.3 |
| 450 | -1000 + 250µm | 10.0 | |

From the experiments above, it can be concluded that there are several competing processes potentially occurring during the treatment, namely:
the desirable hydration of aluminium carbide and nitride species;

   H₂O + ¹/₆ Al₄C₃ ⇄ ½ CH₄ + ⅓ Al₂O₃

   H₂O + ²/₃ Al₄C₃ ⇄ C₂H₂ + ⅓ Al₂O₃ + 2Al

   H₂O + ¹/₆ Al₄C₃ ⇄ ¼ C₂H₂ + ⅓ Al₂O₃ + ¾ H₂

   H₂O+ ²/₃ AlN ⇄ ²/₃ NH₃ + ⅓ Al₂O₃

   less desirable hydration reactions;

   H₂O + ¹/₁₂ Al₄C₃ ⇄ ¼ CH₄ + ⅓ Al(OH)₃

   H₂O + ¹/₁₂ Al₄C₃ ⇄ ⅛ C₂H₂ + ⅓ Al(OH)₃ + ⅜ H₂

   H₂O + ⅓ AlN ⇄ ⅓ NH₃ + ⅓ Al(OH)₃

   H₂O + ²/₃ Al ⇄ H₂ + ⅓ Al₂O₃

   and undesirable reactions;

   H₂O + MgO ⇄ Mg (OH)₂

   H₂O + ⅓ Al₂O₃ ⇄ ²/₃ Al (OH)₃

   H₂O + ⅓ Al ⇄ ⅓ Al (OH)₃ + ½ H₂

   C + O₂ ⇄ CO₂

   C + ½ O₂ ⇄ CO

   CO + ½ O₂ ⇄ CO₂

Thermodynamic calculations based on free energy of formations of the reactants and products suggests that the hydration reactions of the magnesia and alumina are likely to be unfavoured above reaction temperatures of 277°C and 117°C respectively.

The upper temperature limit is set by oxidation reactions which will take place with the carbon in the scrap material which will restrict the yield of the process as graphite is lost. At temperatures below 500°C approximately the oxidation rate of graphite is not detrimental to the overall yield of the process.

The success of the process depends on exposing the used magnesia-graphite scrap to steam in the temperature range appropriate to promote the desired reactions for sufficient time to allow the problem contaminants to be reduced in levels such that they cause no cracking when the scrap is reconstituted into a product. The time period is dictated by the diffusion path of steam into the individual grains, but consideration should be given to the most usable size distribution in practice.

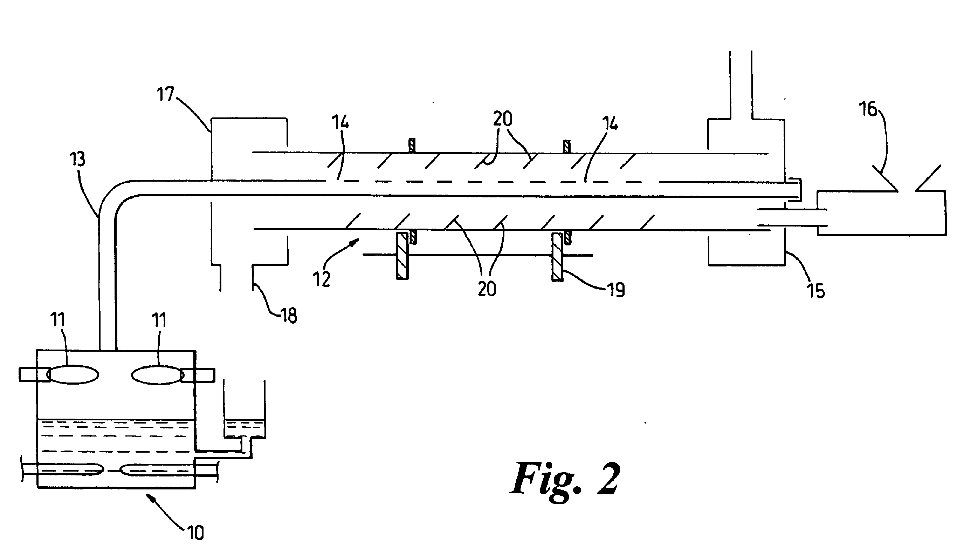

In Figure 2 there is illustrated in schematic form a production facility having a steam generator 10 fitted with steam superheaters 11, which provides a supply of superheated steam to an inclined rotary reaction vessel 12 through a feed pipe 13, the feed pipe 13 having a number of outlets 14 along its length within the reaction vessel. To one end of the reaction vessel is a fixed end housing 15 with an associated material feed 16, and to the opposite end there is a fixed end housing 17 with an associated treated material outlet 18. The rotary reaction vessel has an appropriate drive 19 for its rotation during the operation of the process. Thus, material fed into the reaction vessel is progressed along it and is agitated by strategically located paddles 20 located on the furnace inside wall. As the material progresses through the furnace, superheated steam generated in the steam generator is injected through the outlets 14 in the feed pipe into the agitated material progressing along the furnace. The residence time of the material in the furnace is controlled by its angle of inclination, rotation speed and diameter/length ratio.

With the material introduced into the furnace being a particulate scrap material of magnesia-graphite recovered from a furnace lining and known to contain aluminium carbide and nitride, crushed to a particle size predominantly less than 4mm there is enabled the treatment of that scrap material in the furnace at a temperature of 400°C for a period of 40 minutes to convert its contaminants into a stable form to enable the successful use of that otherwise scrap material as a component in the production of a fresh furnace lining or pressed products.

The material after treatment can then be used as a contribution to the batch in the production of magnesia graphite compacts. The resulting products are found to be dimensionally stable and show no signs of cracking on storage under normal conditions.

In a variation of the process of the invention employing the installation illustrated schematically in Figure 2, feedstock magnesia-graphite scrap known to have originally contained aluminium antioxidant additions was crushed so as to substantially pass a 3mm screen. This material was fed into the rotary reaction chamber and exposed to steam entering the chamber at greater than 350°C for a period of 40 minutes on average.

After treatment and further drying, this treated material was used to contribute 30% of a batch to make 15% carbon resin bonded magnesia-graphite bricks. On curing the compacts made using the treated scrap showed good dimensional stability and no signs of cracking on storage under normal conditions.

## Claims

1. A process for the treatment of magnesia-graphite material containing aluminium carbide and aluminium nitride reclaimed from a refractory lining after the end of its useful life comprising applying superheated steam to particulate feedstock material formed from the reclaimed material whilst maintaining the feedstock material at a temperature in the range 100°C to 600°C in a suitable vessel and wherein a common maximum particle size is 5mm and the material remains within the furnace for not less than 10 minutes but not greater than 90 minutes.

2. A process as in Claim 1 wherein the superheated steam is introduced into a flow of particulate feedstock material.

3. A process as in Claim1 or 2 wherein the material remains in the furnace for between 15 and 45 minutes.

4. A process as in any of Claims 1 to 3 wherein a particle size predominantly less than 4mm is maintained at a temperature of 400°C for 40 minutes.

5. A process as in any of Claims 1 to 4 wherein during the application of superheated steam the particulate feedstock material is vibrated or otherwise agitated.

6. A process as in any of Claims 1 to 5 wherein the particulate feedstock material is progressed through an inclined rotating reactor or a rotary swept multiple level vessel.

7. A process as in Claim 6 wherein the residence time of particulate feedstock material in the rotating reactor or rotary swept multiple level vessel is controlled by its angle of inclination, rotation speed and diameter/length ratio.

8. Use of a refractory material produced by the process of any one of Claims 1 to 7 as a contribution to a batch of materials for the production of compacts or bricks.

## Patentansprüche

1. Ein Verfahren zur Behandlung von Magnesiumoxid - Graphit - Material, das Aluminiumkarbid und Aluminiumnitrid enthält und das aus einer feuerfesten Verkleidung nach dem Ende ihrer Benutzungsdauer zurückgewonnen wird, umfassend die Beaufschlagung mit einem überhitzten Dampf auf das partikelförmige, aus dem zurückgewonnenen Material gebildete Ausgangsmaterial, während das Ausgangsmaterial in einem Temperaturbereich zwischen 100°C und 600°C in einem geeigneten Behälter gehalten wird und wobei eine gemeinsame maximale Partikel - Größe sich auf 5 mm beläuft und das Material in dem Ofen während nicht weniger als 10 Minuten und nicht mehr als 90 Minuten bleibt.

2. Ein Verfahren nach Patentanspruch 1, bei dem der überhitzte Dampf in einen Fluss von partikelförmigem Ausgangsmaterial eingeführt wird.

3. Ein Verfahren nach Patentanspruch 1 oder 2, bei dem das Material während 15 bis zu 45 Minuten im Ofen bleibt.

4. Ein Verfahren nach irgendeinem der Patentansprüche 1 bis 3, bei dem eine Partikel - Größe von vorwiegend weniger als 4 mm auf einer Temperatur von 400°C während 40 Minuten gehalten wird.

5. Ein Verfahren nach irgendeinem der Patentansprüche 1 bis 4, bei dem während der Beaufschlagung mit einem überhitzten Dampf das partikelförmige Ausgangsmaterial einer Vibration unterzogen wird oder auf eine andere Weise vermischt wird.

6. Ein Verfahren nach irgendeinem der Patentansprüche 1 bis 5, bei dem das partikelförmige Ausgangsmaterial durch einen Neigungs - Rotationsreaktor oder einen Drehbewegungs - Mehrebenenbehälter vorangetrieben wird.

7. Ein Verfahren nach Patentanspruch 6, bei dem die Verweilzeit des partikelförmigen Ausgangsmaterials im Neigungs - Rotationsreaktor oder im Drehbewegungs - Mehrebenenbehälter durch seinen Neigungswinkel, seine Drehgeschwindigkeit und sein Verhältnis Durchmesser / Länge gesteuert wird.

8. Benutzung eines feuerfesten Materials durch das Verfahren nach irgendeinem der Patentansprüche 1 bis 7 als ein Beitrag zu einer Materialmenge für die Herstellung von Presskörpern oder Backsteinen.

## Revendications

1. Procédé pour le traitement d'un matériau en magnésie-graphite contenant du carbure d'aluminium et du nitrure d'aluminium recyclé à partir d'une garniture réfractaire au terme de sa vie utile comprenant l'application de vapeur surchauffée au matériau de base sous forme de particules formé à partir du matériau recyclé, tout en maintenant le matériau de base à une température dans la plage de 100°C à 600°C dans un récipient approprié et dans lequel la taille commune maximum des particules est de 5 mm et le matériau demeure dans le four pendant pas moins de 10 minutes mais pas plus de 90 minutes.

2. Procédé de la revendication 1 dans lequel la vapeur surchauffée est introduite dans un courant de matériau de base sous forme de particules.

3. Procédé de l'une des revendications 1 ou 2 dans lequel le matériau demeure dans le four pendant de 15 minutes à 45 minutes.

4. Procédé de l'une des revendications 1 à 3 dans lequel une taille de particules majoritairement inférieures à 4 mm est maintenue à une température de 400°C pendant 40 minutes.

5. Procédé de l'une des revendications 1 à 4 dans lequel le matériau de base sous forme de particules est soumis à des vibrations ou autrement agité pendant l'application de vapeur surchauffée.

6. Procédé selon l'une des revendications 1 à 5 dans lequel on fait progresser le matériau de base sous forme de particules à travers un réacteur rotatif incliné ou un récipient à plusieurs niveaux à balayage rotatif.

7. Procédé de la revendication 6 dans lequel le temps de résidence du matériau de base sous forme de particules dans le réacteur rotatif ou le récipient à plusieurs niveaux à balayage rotatif est contrôlé par son angle d'inclinaison, la vitesse de rotation et le rapport diamètre/longueur.

8. Utilisation d'un matériau réfractaire produit suivant procédé de l'une quelconque des revendications 1 à 7 en tant que partie d'un lot de matériaux pour la production de compacts ou de briques.
